## Europäisches Patentamt
## European Patent Office
## Office européen des brevets

(19)

(11) Veröffentlichungsnummer: **0 056 593 B1**

(12) **EUROPÄISCHE PATENTSCHRIFT**

(45) Veröffentlichungstag der Patentschrift:
04.06.86

(51) Int. Cl.⁴: **H 02 M 3/335, H 02 J 7/10**

(21) Anmeldenummer: **82100113.8**

(22) Anmeldetag: **09.01.82**

(54) Schaltungsanordnung zur geregelten Speisung eines Verbrauchers.

(30) Priorität: **17.01.81 DE 3101375**

(43) Veröffentlichungstag der Anmeldung:
**28.07.82 Patentblatt 82/30**

(45) Bekanntmachung des Hinweises auf die Patenterteilung:
**04.06.86 Patentblatt 86/23**

(84) Benannte Vertragsstaaten:
**AT BE CH DE FR GB IT LI LU NL SE**

(56) Entgegenhaltungen:
**EP - A - 0 030 026
EP - A - 0 030 276
US - A - 4 048 219**

**WIRELESS WORLD, Band 81, Nr. 1479, November 1975
London R.M. CARTER "Variabel Voltage-Ratio
Transistor Converter" Seite 159
ELECTRONICS, Band 51, Nr. 26, 21. Dezember 1978 New
York, USA R.J. BOSCHERT "Flyback Converters
Solid-State Solution to Low-Cost Switching Power
Supplies" Seiten 100 bis 104**

(73) Patentinhaber: **Braun Aktiengesellschaft,
Rüsselsheimer Strasse 22, D-6000 Frankfurt/Main (DE)**

(72) Erfinder: **Schwarz, Gerhard E., Eggestrasse 16,
D-5990 Altena 1 (DE)**

(74) Vertreter: **Einsele, Rolf, Braun Aktiengesellschaft
Postfach 1120 Frankfurter Strasse 145, D-6242 Kronberg
Taunus (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf eine Schaltungsanordnung zur geregelten Speisung eines aus einem Akkumulator und einem Gleichstrommotor bestehenden Verbrauchers aus einer Gleichspannungsquelle unterschiedlicher Spannung.

Bei transportfähigen elektrischen und elektronischen Geräten ist es erwünscht, dass sie an verschiedenen Spannungen betrieben werden können oder, falls sie Akkumulatoren aufweisen, dass diese Akkumulatoren an verschiedenen Spannungen aufladbar sind. Beispielsweise werden elektrische Trockenrasierapparate, Elektronenblitzgeräte, Kofferradios o.dgl. oft auf Auslandsreisen mitgenommen und dann in den jeweiligen Ländern mit unterschiedlichen Netzspannungen betrieben. Diese Netzspannungen variieren in der Regel einerseits zwischen 110 V und 240 V und andererseits zwischen 50 Hz und 60 Hz.

Für die Anpassung der kleinen Geräte bzw. Akkumulatoren an die verschiedenen Spannungen ist eine Spannungstransformation erforderlich, die kapazitiv oder induktiv durchgeführt werden kann.

Es ist bereits eine Transistor-Wandlerschaltung bekannt, mit deren Hilfe aus einer Netzwechselspannung zum einen ein Ladestrom für einen Akkumulator und zum anderen ein höherer Gleichstrom für den Antrieb eines Motors erzeugt werden kann (DE-OS 2 014 377, US-PS 3 568 038). Hierbei ist ein hochfrequent betriebener Durchflusswandler mit sättigbarem Kern vorgesehen, der primärseitig an die gleichgerichtete Netzspannung angeschaltet ist und sekundärseitig die gewünschten Ströme liefert. Die bekannte Schaltung lässt sich nur an einer bestimmten Netzspannung betreiben, passt sich also nicht automatisch an unterschiedliche Spannungen an. Da der Kern des Wandlers jeweils in die Sättigung gelangt, ist der Wirkungsgrad nur klein, und es ergeben sich thermische Probleme.

Aus der Literaturstelle «WIRELESS WORLD», Band 81, Nr. 1479, November 1975, London, S. 519, ist eine Transistor-Wandlerschaltung bekannt, bei der die Primärwicklung eines Übertragers in Reihe zur Schaltstrecke eines ersten Transistors und einer Gleichspannungsquelle geschaltet ist. Die Basis des Transistors ist sowohl an einen Anschluss der Sekundärwicklung des Übertragers als auch an einen Schaltstreckenanschluss eines zweiten Transistors angeschlossen. Die Basis des zweiten Transistors ist über eine Zenerdiode an die geglättete Ausgangsspannung angeschlossen, die über eine Diode von dem anderen Wicklungsanschluss der Sekundärwicklung des Übertragers abgegriffen wird. Eine Anzapfung der Sekundärwicklung des Übertragers ist an einen Spannungsteiler mit einem ersten und zweiten Widerstand angeschlossen, mit dem eine Diode in Reihe geschaltet ist. Bei angeschlossener Versorgungsspannungsquelle wird die Schwingung des Transistorwandlers eingeleitet, indem ein geringer Strom durch den ersten Widerstand des Spannungsteilers und über die Anzapfung der Sekundärwicklung des Übertragers in die Basis des ersten Transistors fliesst. Der Einschaltvorgang des ersten Transistors wird durch die positive Rückkopplung des Transistors unterstützt, so dass der Kollektorstrom des ersten Transistors ansteigt bis infolge der Sättigung des Übertragers der Basisstrom abfällt und infolge der positiven Rückkopplung der erste Transistor abschaltet. Bei abgeschaltetem ersten Transistor fliesst die im Übertrager gespeicherte Energie über die sekundärseitige Diode in einen Ausgangskondensator. Sinkt der in den Ausgangskondensator fliessende Strom auf Null ab, so bricht der Stromfluss in den Windungen des Übertragers zusammen und der Einschaltvorgang des ersten Transistors wird erneut eingeleitet. Dieser Schwingvorgang wiederholt sich solange, bis sich der Ausgangskondensator auf einen Wert aufgeladen hat, der die Zenerspannung der an die Basis des zweiten Transistors angeschlossenen Zenerdiode erreicht hat. In diesem Fall wird der zweite Transistor leitend und verbindet die Basis des ersten Transistors über seine Schaltstrecke mit Masse- oder Bezugspotential, so dass die Schwingung unterbrochen wird.

Der bekannte Transistorwandler eignet sich jedoch nicht zur Ladung eines Akkumulators mit einem stabilisierten Ladestrom sowie zum Betrieb eines Gleichstrommotors mit konstanter Betriebsspannung für den Gleichstrommotor bei einem Betrieb an Gleichspannungsquellen mit sehr unterschiedlicher Spannungshöhe.

Aus der Literaturstelle «ELECTRONICS», Band 51, Nr. 26, Dezember 1978, New York, U.S.A. S. 100–104, ist ein Sperrwandler zur Konstant-Spannungsversorgung von insbesondere integrierten Schaltkreisen bzw. Mikrocomputern bekannt, der wahlweise an einer Wechselspannung von 110 V oder 220 V betreibbar ist. Der Sperrwandler weist in Reihe zur Primärwicklung eines Übertragers die Schaltstrecke eines ersten Transistors und eines Emitterwiderstandes auf. Ein zweiter Transistor ist kollektorseitig mit der Basis des ersten Transistors verbunden und mit seiner Basis an den Emitterwiderstand angeschlossen. Über eine Wicklung, eine Diode und einen Fototransistor, der Teil eines Optokopplers ist, wird die Basis des zweiten Transistors zusätzlich mit einem der Eingangsspannung proportionalen Steuersignal beaufschlagt. Die Fotodiode des Optokopplers ist darüber hinaus über eine Zenerdiode an die geglättete Ausgangsspannung des Sperrwandlers angeschlossen. Diese bekannte Anordnung dient dazu, mehrere, möglichst konstante Ausgangsspannungen unterschiedlicher Spannungshöhe zur Verfügung zu stellen.

Aus der US-A-4 084 219 ist ein Gleichspannungswandler bekannt, der einen Sperrwandler mit einem Übertrager enthält, in Reihe zu dessen Primärwicklung die Schaltstrecke eines die Schwingfrequenz des Sperrwandlers bestimmenden Transistors geschaltet ist. Darüber hinaus ist ein die Ausgangsspannung steuernder Transistor vorgesehen, dessen Basis über eine Zenerdiode an die geglättete Ausgangsspannung des Sperr-

wandlers angeschlossen ist. Um die Ausgangsspannung möglichst konstant zu halten, ist zusätzlich eine Verbindung zwischen der Basis des die Schwingfrequenz des Sperrwandlers bestimmenden Transistors über einen Widerstand an die geglättete Ausgangsspannung vorgesehen. Die bekannte Schaltungsanordnung ist ausschliesslich zur Abgabe einer konstanten Ausgangsspannung bei veränderlichen Eingangsspannungen bestimmt und geeignet.

Aufgabe der vorliegenden Erfindung ist es, eine Schaltungsanordnung zur geregelten Speisung eines aus einem Akkumulator und einem Gleichstrommotor bestehenden Verbrauchers aus Eingangsspannungsquellen unterschiedlicher Spannung unter Verwendung eines Sperrwandlers zu schaffen, die im Ladebetrieb des Akkumulators den Ladestrom stabilisiert und beim Betrieb des Gleichstrommotors eine konstante Betriebsspannung für den Gleichstrommotor gewährleistet.

Diese Aufgabe wird erfindungsgemäss durch die Kombination der Merkmale a) bis g) des Anspruchs 1 gelöst.

Die erfindungsgemässe Lösung stellt im Ladebetrieb sicher, dass der Ladestrom in den Akkumulator stabilisiert ist, während beim Betreiben des Gleichstrommotors aus der speisenden Spannungsquelle eine konstante Betriebsspannung für den Gleichstrommotor sichergestellt wird.

Es ist noch darauf hinzuweisen, dass eine Schaltungsanordnung zur geregelten Speisung eines aus einem Akkumulator und einem Gleichstrommotor bestehenden Verbrauchers aus einer Gleichspannungsquelle unterschiedlicher Spannung mit den Merkmalen a, b und c des Anspruchs 1 beschrieben ist in der nach dem Prioritätstag des vorliegenden Patentes veröffentlichten DE-A-2 949 421 und in der EP-A1-30 276, die nach Artikel 54 (3) EPÜ für die Vertragsstaaten AT, CH, FR, GB, IT, LI, NL zum Stand der Technik gehört.

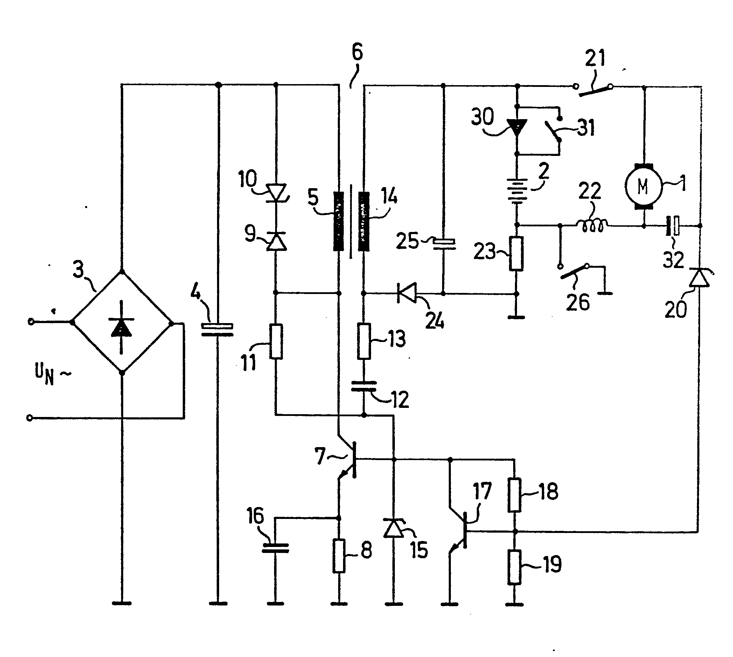

Anhand eines in der einzigen Figur der Zeichnung soll ein Ausführungsbeispiel der Erfindung näher erläutert werden.

Die in der Zeichnung dargestellte Schaltungsanordnung ermöglicht es, an unterschiedlichen Eingangsspannungen $U_N$ wahlweise einen Akkumulator 2 aufzuladen oder einen parallelschaltbaren Gleichstrommotor 1 zu betreiben.

Eine in einem weiten Bereich von z.B. 110 Volt bis 240 Volt veränderbare Netz-Wechselspannung $U_N$ wird dabei über eine Gleichrichter-Brückenschaltung 3 einen den Gleichspannungsklemmen der Gleichrichter-Brückenschaltung 3 parallelgeschaltetem Eingangskondensator 4 zugeführt, wobei sowohl der eine Gleichspannungsanschluss der Gleichrichter-Brückenschaltung 3 als auch der eine Anschluss des Eingangskondensators 4 an Masse angeschlossen ist. Parallel zu den Gleichspannungsklemmen der Gleichrichter-Brückenschaltung 3 bzw. zum Eingangskondensator 4 ist die Reihenschaltung einer Primärwicklung 5 eines Übertragers 6 mit der Kollektor-Emitter-Strecke eines Schalttransistors 7 geschaltet, wobei der Emitter des Schalttransistors 7 über einen ersten Widerstand 8 an Masse liegt. Parallel zu der Primärwicklung 5 des Übertragers 6 sind in entgegengesetzter Durchlassrichtung gepolt eine Diode 9 sowie eine dritte Zenerdiode 10 vorgesehen. Die Anode der Diode 9 liegt dabei sowohl an der Primärwicklung 5 des Übertragers 6 als auch an einem dritten Widerstand 11, der über einen zweiten Kondensator 12 und einen vierten Widerstand 13 mit der Sekundärwicklung 14 des Übertragers 6 verbunden ist.

Mit dem zweiten Kondensator 12 und dem dritten Widerstand 11 ist zusätzlich noch eine zweite Zenerdiode 15 verbunden, die parallel zur Basis-Emitter-Strecke des Schalttransistors 7 liegt und anodenseitig an Masse angeschlossen ist. Der Emitter des Schalttransistors 7 ist ausser über den ersten Widerstand 8 auch noch über einen vierten Kondensator 16 an Masse gelegt. Von der Kathode der ersten Zenerdiode 15 bzw. von der Basis des Schalttransistors 7 führt eine Verbindung zu dem Kollektor eines Steuertransistors 17, dessen Basis mit zwei Widerständen 18, 19 verbunden ist, von denen der eine Widerstand 19 an Masse liegt und der andere mit dem Kollektor des Steuertransistors 17 verbunden ist. Der Emitter des Steuertransistors 17 ist ebenfalls an Massepotential angeschlossen. Die Basis des Steuertransistors 17 ist ausserdem mit der Anode einer ersten Zenerdiode 20 verbunden, deren Kathode unmittelbar mit einem Anschluss des Gleichstrommotors 1 und über einen ersten Kondensator 32 mit dem anderen Anschluss des Gleichstrommotors 1 verbunden ist.

Parallel zur Sekundärwicklung 14 des Übertragers 6 ist die Reihenschaltung eines dritten Kondensators 25 mit einer Diode 24 vorgesehen, deren Kathode an den einen Anschluss der Sekundärwicklung 14 des Übertragers 6 angeschlossen ist, wobei die Verbindung des dritten Kondensators 25 mit der Diode 24 an Masse gelegt ist. Parallel zum dritten Kondensator 25 ist ein Akkumulator 2 mit in Reihe geschaltetem zweiten Widerstand 23 vorgesehen.

In Reihe zum Akkumulator 2 und zum zweiten Widerstand 23 liegt als Ladekontrollampe eine lichtemittierende Diode 30 mit kathodenseitigem Anschluss am Akkumulator 2 und anodenseitigem Anschluss an die andere Anschlussklemme der Sekundärwicklung 14 des Übertragers 6. Diese lichtemittierende Diode 30 ist mittels eines parallelgeschalteten dritten Schalters 31 kurzschliessbar.

Zwischen dem ersten Anschluss des Gleichstrommotors 1 und dem Akkumulator 2 ist ein erster Schalter 21 vorgesehen, während der zweite Anschluss des Gleichstrommotors 1 über eine Drossel 22 mit der Verbindung des Akkumulators 2 mit dem zweiten Widerstand 23 verbunden ist. Schliesslich ist noch parallel zum zweiten Widerstand 23 ein zweiter Schalter 26 vorgesehen, mit dem die Drosselspule 22 mit ihrem an den Akkumulator 2 angeschlossenen Ende an Masse legbar ist.

Nachstehend soll die Funktion der dargestellten Schaltungsanordnung näher erläutert werden.

Bei der Funktionsweise der dargestellten Schaltungsanordnung ist der Betriebszustand, bei dem die Schalter 21 und 26 geschlossen sind, von dem Betriebszustand zu unterscheiden, bei dem die Schalter 21 und 26 geöffnet sind. Im geschlossenen Zustand der Schalter 21 und 26 wird der Gleichstrommotor 1 mit konstanter Spannung aus dem speisenden Wechselspannungsnetz betrieben, während im geöffneten Zustand eine Aufladung des Akkumulators 2 mit einem stabilisierten Ladestrom aus dem speisenden Wechselspannungsnetz stattfindet.

Zunächst soll die Schaltungsanordnung bei geschlossenen Schaltern 21 und 26 betrachtet werden. Wird eine veränderbare Netz-Wechsel-Spannung $U_N$ an die Gleichrichter-Brückenschaltung 3 angelegt, so wird die gleichgerichtete Spannung über die Gleichspannungsklemmen der Gleichrichter-Brückenschaltung 3 an den parallelgeschalteten Eingangskondensator 4 gegeben. Sodann wird der zweite Kondensator 12 über den dritten Widerstand 11 aufgeladen, wodurch die Spannung an der Basis des Schalttransistors 7 ansteigt, bis dieser leitend wird. Da die Primärwicklung 5 des Übertragers 6 eine Induktivität darstellt, steigt bei leitendem Schalttransistor 7 der Strom durch den Schalttransistor 7 linear an. Dieser Strom verursacht am ersten Widerstand 8 einen entsprechenden Spannungsabfall. Die an die Basis des Schalttransistors 7 angeschlossene und anodenseitig mit Masse verbundene zweite Zenerdiode 15 wird leitend, wenn die Summe von dem durch den Primärstrom an dem ersten Widerstand 8 hervorgerufenen Spannungsabfall und der Basis-Emitter-Spannung des Schalttransistors 7 die Zenerspannung der zweiten Zenerdiode 15 erreicht hat. Ist die Durchbruchspannung der zweiten Zenerdiode 15 erreicht, so kann der Strom durch den Transistor nicht weiter ansteigen. Der Schalttransistor 7 wird abgeschaltet während die Spannung an der Sekundärwicklung 14 des Übertragers 6 ihre Polarität ändert. Dadurch wird die Diode 24 leitend, so dass sie den dritten Kondensator 25 auflädt, wodurch die in dem Übertrager 6 gespeicherte Energie über die Diode 24 in den aus der Parallelschaltung des Akkumulators 2 und dem Gleichstrommotor 1 bestehenden Verbraucher entlädt.

Bei geschlossenen Schaltern 21 und 26 ist der zweite Widerstand 23 überbrückt und der Sperrwandler bleibt solange in Betrieb, bis die Spannung am Verbraucher einen Wert erreicht hat, der der Summe der Basis-Emitter-Spannung des Steuertransistors 17 und der Zenerspannung der ersten Zenerdiode 20 gleich ist. Bei Überschreiten der Zenerspannung der ersten Zenerdiode 20 wird der Steuertransistor 17 leitend und legt die Basis des Schalttransistors 7 an Masse, wodurch der Sperrwandler ausser Betrieb gesetzt wird, bis die Spannung an der ersten Zenerdiode 20 erneut unter den Wert der Zenerspannung abgesunken ist. Damit bildet die Schaltungsanordnung bei geschlossenen Schaltern 21 und 26, d.h. bei Betrieb des Gleichstrommotors 1 eine Konstantspannungsquelle.

Im Ladebetrieb, d.h. bei geöffneten Schaltern 21 und 26 entlädt sich die im Übertrager 6 gespeicherte Energie über die Diode 24 in die Reihenschaltung des zweiten Widerstandes 23 und des Akkumulators 2. Ein dem Ladestrom entsprechender Spannungswert wird am Widerstand 23 erfasst und führt bei einem Wert, der grösser ist als die Durchbruchspannung der ersten Zenerdiode 20 und des Basis-Emitter-Spannungsabfalls des Steuertransistors 17 dazu, dass der Steuertransistor 17 in den leitenden Zustand gesteuert wird und der Sperrwandler seinen Betrieb einstellt. Wenn die Spannung am Widerstand 23 so niedrig geworden ist, dass die Zenerdiode 20 und damit der Transistor 17 wieder sperren, kann der Sperrwandler wieder anschwingen.

Die in entgegengesetzter Durchlassrichtung gepolten und kathodenseitig miteinander verbundenen dritte Zenerdiode 10 und Diode 9 haben im wesentlichen die Aufgabe, die Spitzen der Spannungs-Rückschlagimpulse zu beseitigen, die sich aufgrund der Streuinduktivität des Übertragers bilden.

Mit Hilfe der lichtemittierenden Diode 30 kann angezeigt werden, ob der Akkumulator 2 geladen wird. Wird der Akkumulator 2 nicht geladen, so sind die Schalter 31, 21, 26 alle geschlossen, d.h die lichtemittierende Diode 30 ist kurzgeschlossen und leuchtet nicht auf.

**Patentansprüche**

1. Schaltungsanordnung zur geregelten Speisung eines aus einem Akkumulator (2) und einem Gleichstrommotor (1) bestehenden Verbrauchers aus einer Gleichspannungsquelle (3) unterschiedlicher Spannung mit folgenden Merkmalen:

a) ein Sperrwandler weist einen Übertrager (6) auf dessen Primärwicklung (5) über einen Schalttransistor (7) und einen ersten Widerstand (8) mit der Gleichspannungsquelle (3) verbunden ist und parallel zu dessen Sekundärwicklung (14) der Verbraucher in Reihe zu einem Gleichrichter (24) geschaltet ist;

b) die Basis des Schalttransistors (7) ist einerseits über einen dritten Widerstand (11) mit der Primärwicklung (5) des Übertragers (6) und andererseits über die Reihenschaltung eines zweiten Kondensators (12) und eines weiteren Widerstandes (13) mit der Sekundärwicklung (14) des Übertragers (6) verbunden;

c) ein Steuertransistor (17) liegt mit seiner Schaltstrecke parallel zur Basis-Emitter-Strecke des Schalttransistors (7) und zum ersten Widerstand (8);

d) die Basis des Steuertransistors (17) ist mit der Anode einer ersten Zenerdiode (20) verbunden, deren Kathode an die geglättete Ausgangsspannung des Sperrwandlers anschliessbar ist;

e) die Basis des Schalttransistors (7) ist an eine zweite Zenerdiode (15) angeschlossen, die zur Schaltstrecke des Steuertransistors (17) parallelgeschaltet und bei leitendem Steuertransistor kurzschliessbar ist;

f) der eine Anschluss des Akkumulators (2) ist

über einen ersten Schalter (21) mit einem Anschluss des Gleichstrommotors (1) sowie der Kathode der ersten Zenerdiode (20) und der andere Anschluss des Akkumulators (2) sowohl über eine Induktivität (22) mit dem anderen Anschluss des Gleichstrommotors (1) als auch über einen zweiten Widerstand (23) mit parallel geschaltetem zweiten Schalter (26) mit Masse- oder Bezugspotential verbunden;

g) die genannten Schalter (21, 26) sind im Ladebetrieb des Akkumulators geöffnet und für den Betrieb des Gleichstrommotors geschlossen.

2. Schaltungsanordnung nach Anspruch 1, dadurch gekennzeichnet, dass in Reihe zum Akkumulator (2) eine lichtemittierende Diode (30) geschaltet ist, die mittels eines parallelgeschalteten dritten Schalters (31) kurzschliessbar ist.

3. Schaltungsanordnung nach einem der vorstehenden Ansprüche, dadurch gekennzeichnet, dass parallel zu den Anschlüssen des Gleichstrommotors (1) ein erster Kondensator (32) geschaltet ist.

## Claims

1. Circuit arrangement for the regulated supply of a load comprising an accumulator (2) and a direct current motor (1) from a d.c. voltage source (3) of varying voltage with the following features:

a) a flyback converter has a transformer (6), whose primary winding (5) is connected across a transistor switch (7) and a first resistor (8) to the d.c. voltage source (3) and the load is connected in series with the rectifier (24) parallel to the secondary winding (14) of said transformer;

b) the base of the transistor switch (7) is on the one hand connected across a third resistor (11) to the primary winding (5) of transformer (6) and on the other hand across the series connection of a second capacitor (12) and a further resistor (13) to the secondary winding (14) of transformer (6);

c) a control transistor (17) has its switching junction parallel to the base-emitter junction of transistor switch (7) and to the first resistor (8);

d) the base of the control transistor (17) is connected to the anode of a first Zener diode (20), whose cathode can be connected to the smoothed output voltage of the flyback converter;

e) the base of the transistor switch (7) is connected to a second Zener diode (15), which is connected in parallel to the switching junction of the control transistor (17) and is short-circuitable in the case of the control transistor being conductive;

f) one connection of the accumulator (2) is connected across a first switch (21) to a connection of the d.c. motor (1), as well as the cathode of the first Zener diode (20) and the other connection of the accumulator (2) is connected both across an inductance coil (22) to the other connection of the d.c. motor (1) and across a second resistor (23) with parallel-connected second switch (26) to earth or reference potential;

g) said switches (21, 26) are open in charging operation of the accumulator and are closed for the operation of the d.c. motor.

2. Circuit arrangement according to claim 1, characterized in that a light-emitting diode (30) is connected in series to the accumulator (2) and can be short-circuited by means of a parallel-connected third switch (31).

3. Circuit arrangement according to one of the preceding claims, characterized in that a first capacitor (32) is connected in parallel to the connections of the d.c. motor (1).

## Revendications

1. Montage pour l'alimentation réglée, à partir d'une source (3) de tension continue de valeur différente, d'une utilisation constituée par un accumulateur (2) et un moteur à courant continu (1), ledit montage présentant la particularité suivante:

a) un convertisseur indirect comprend un transformateur (6) dont l'enroulement primaire (5) est relié par un transistor de commutation (7) et une première résistance (8) à la source de tension continue (3), et dont l'enroulement secondaire (14) est en parallèle avec le branchement en série d'un récepteur et d'un redresseur (24);

b) la base du transistor de commutation (7) est reliée d'une part à l'enroulement primaire (5) du transformateur (6) par une troisième résistance (11), et d'autre part à l'enroulement secondaire (14) du transformateur (6) par le branchement en série d'un deuxième condensateur (12) et d'une autre résistance (13);

c) le circuit de commutation d'un transistor de commande (17) est en parallèle avec le circuit base-émetteur du transistor de commutation (7) et la première résistance (8);

d) la base du transistor de commande (17) est reliée à l'anode d'une première diode de Zener (20), dont la cathode est reliée à la tension de sortie filtrée du convertisseur indirect;

e) la base du transistor de commutation (7) est reliée à une deuxième diode de Zener (15), branchée en parallèle avec le circuit de commutation du transistor de commande (17) et court-circuitée quand le transistor de commande est conducteur;

f) une borne de l'accumulateur (2) est reliée par un premier interrupteur (21) à une borne du moteur à courant continu (1) et à la cathode de la première diode de Zener (20), et la seconde borne de l'accumulateur (2) est reliée par une inductance (22) à la seconde borne du moteur à courant continu (1) et par une deuxième résistance (23) en parallèle avec un deuxième interrupteur (26) au potentiel de masse ou de référence;

g) lesdits interrupteurs (21, 26) sont ouverts en mode charge de l'accumulateur et fermés pour le fonctionnement du moteur à courant continu.

2. Montage selon revendication 1, caractérisé par une diode électroluminescente (30), branchée en série avec l'accumulateur (2) et court-circuitable par un troisième interrupteur (31) en parallèle.

3. Montage selon une des revendications 1 ou 2, caractérisé par un premier condensateur (32) en parallèle avec les bornes du moteur à courant continu (1).